# EUROPÄISCHE PATENTANMELDUNG

(11) **EP 4 443 679 A1**
(43) Veröffentlichungstag der Anmeldung: **09.10.2024**
(21) Anmeldenummer: 24164763.5
(22) Anmeldetag: 20.03.2024
(51) Int. Cl.: H02G 5/00, H02G 5/10

(54) **STROMSCHIENE, ENERGIESPEICHERSYSTEM UMFASSEND EINE STROMSCHIENE**

(30) Priorität: 03.04.2023 DE 102023108408
(71) Anmelder: Carl Freudenberg KG, 69469 Weinheim (DE)
(72) Erfinder: STRIEFLER, Armin, 74613 Öhringen (DE); Kritzer, Peter, 67147 Forst (DE)

(57) **Zusammenfassung**

Stromschiene (1), umfassend einen elektrisch leitfähigen Verbinder (2) und eine elektrisch isolierende Umhüllung (3), wobei der Verbinder (2) zumindest zwei durch einen Steg (4) verbundene Anschlussbereiche (5) aufweist, wobei die Umhüllung (3) den Steg (4) umgibt, wobei die Umhüllung (3) aus Kunststoff ausgebildet ist, wobei die Umhüllung (3) als Formteil ausgebildet ist. Die Erfindung betrifft darüber hinaus ein Energiespeichersystem (14) mit zumindest einer Stromschiene (1).

## Beschreibung

Die Erfindung betrifft eine Stromschiene, umfassend einen elektrisch leitfähigen Verbinder und eine elektrisch isolierende Umhüllung, wobei der Verbinder zumindest zwei durch einen Steg verbundene Anschlussbereiche aufweist, wobei die Umhüllung den Steg umgibt. Die Erfindung betrifft ferner ein Energiespeichersystem, welches mit zumindest einer derartigen Stromschiene ausgerüstet ist.

### Technisches Gebiet

Unter Stromschienen werden Bauteile in einem Energiespeichersystem verstanden, die einzelne Energiespeicherzellen innerhalb des Energiespeichersystems miteinander verbinden. Des Weiteren kommen Stromschienen zum Verbinden mehrerer Energiespeichersysteme oder zum Verbinden mit anderen Aggregaten und Komponenten, wie beispielsweise der Leistungselektronik oder Schaltelemente, zum Einsatz.

Energiespeichersysteme, insbesondere wiederaufladbare Speicher für elektrische Energie, sind vor allem in mobilen Systemen weit verbreitet. Wiederaufladbare Speicher für elektrische Energie werden beispielsweise in tragbaren elektronischen Geräten wie Smartphones oder Laptops eingesetzt. Des Weiteren werden wiederaufladbare Speicher für elektrische Energie vermehrt zum Bereitstellen von Energie für elektrisch angetriebene Fahrzeuge eingesetzt. Dabei ist eine große Bandbreite elektrisch angetriebener Fahrzeuge denkbar, neben Personenkraftwagen beispielsweise auch Zweiräder, Kleintransporter oder Lastkraftwagen. Anwendungen in Robotern, Schiffen, Flugzeugen und mobilen Arbeitsmaschinen sind ebenfalls denkbar. Weitere Einsatzgebiete von elektrischen Energiespeichersystemen sind stationäre Anwendungen, beispielsweise in Backup-Systemen, in Netzwerkstabilisierungssystemen und zur Speicherung elektrischer Energie aus erneuerbaren Energiequellen.

Ein häufig eingesetztes Energiespeichersystem ist dabei ein wiederaufladbarer Speicher in Form eines Lithium-Ionen-Akkumulators. Lithium-Ionen-Akkumulatoren weisen, wie andere wiederaufladbare Speicher für elektrische Energie auch, zumeist mehrere Energiespeicherzellen auf, welche gemeinsam in einem Gehäuse verbaut sind. Mehrere elektrisch miteinander verbundene Energiespeicherzellen werden dabei meist zu einem Modul zusammengefasst.

Dabei erstreckt sich das Energiespeichersystem nicht nur auf Lithium-Ionen-Akkumulatoren. Auch andere wiederaufladbare Energiespeichersysteme wie Lithium-Schwefel-Batterien, Feststoff-Batterien, Natrium-Ionen-Batterien oder Metall-Luft-Batterien sind denkbare Energiespeichersysteme. Des Weiteren kommen auch Superkondensatoren als Energiespeichersystem in Betracht.

Bei Automobil- und Industrieanwendungen besteht in der Regel die Anforderung, die Energiespeichersysteme schnell aufladen zu können. Um diese Schnellladung realisieren zu können, ohne dass dadurch die elektrische Verkabelung deutlich voluminöser und schwerer wird, werden in der Regel die Systemspannungen des Energiespeichersystems hoch gewählt. So liegt die Systemspannung der meisten gegenwärtigen Elektrofahrzeug-Batterien bei 400 V. Diese ermöglichen Ladeleistungen von etwa 150 kW. Zur Erzielung höherer Ladeleistungen werden aktuell Energiespeichersysteme mit Systemspannungen von 800 V entwickelt, die Ladeleistungen von mehr als 250 kW erlauben. Energiespeichersysteme mit höherer Systemspannung können in kürzerer Zeit aufgeladen werden, beispielsweise in fünf Minuten mit bis zu 80 % elektrischer Kapazität.

Energiespeichersysteme werden zumeist mittels elektrischer Stromschienen kontaktiert. Benachbarte Energiespeicherzellen innerhalb eines Energiespeichersystems können über zumindest eine Stromschiene elektrisch leitend miteinander verbunden sein. Derartig miteinander verbundene Energiespeicherzellen bilden ein Modul, wobei je nach elektrischer Verschaltung eine Erhöhung der elektrischen Spannung oder eine Erhöhung der Kapazität möglich ist. Innerhalb der ein Modul bildenden Energiespeicheranordnung erfolgt vorzugsweise eine Reihenschaltung der Energiespeicherzellen, so dass sich die elektrische Spannung der Energiespeicheranordnung erhöht. Im Fall eines Lithium-Ionen-Akkumulators beträgt die elektrische Spannung einer einzelnen Energiespeicherzellen etwa 3,6 Volt und durch Reihenschaltung mehrerer Energiespeicherzellen kann die elektrische Spannung deutlich erhöht werden. Darüber hinaus ist denkbar, mehrere gekoppelte Module, enthaltend jeweils in Reihe geschalteter Energiespeicherzellen, parallel zu verschalten. Insbesondere zwischen den Modulen führen die Stromschienen hohe elektrische Ströme und es liegen hohe elektrische Spannungen an. Daher müssen Stromschienen verlässlich elektrisch isoliert werden.

Eine technische Herausforderung bei Energiespeichersystemen ist das thermische Durchgehen ("thermal runaway") von Energiespeicherzellen. Hierbei entlädt sich die in Energiespeicherzellen gespeicherte Energie schlagartig und unkontrolliert. Dabei werden als Reaktionsprodukte neben heißen Gasen mit Temperaturen oberhalb von 1.000 °C auch elektrisch leitfähige Partikel ausgeworfen. Besonders problematisch ist hierbei, dass die beim thermischen Durchgehen freigesetzten Partikelströme sehr starke thermische und abrasive Belastungen bewirken. Treffen solche heißen Partikelströme auf schmelzbare Oberflächen, werden diese innerhalb kurzer Zeit durchdrungen. Besonders problematisch kann es dementsprechend sein, wenn diese heißen Partikelströme auf die Stromschienen auftreffen.

### Stand der Technik

Aus der DE 10 2022 105 700 A1 ist eine Kraftfahrzeugstromschiene bekannt. Die Kraftfahrzeugstromschiene umfasst eine Isolierbeschichtung, wobei die Isolierbeschichtung verhindert, dass die Stromschiene durch den Kontakt mit externen leitenden Oberflächen innerhalb des Fahrzeugs kurzgeschlossen wird. Die Isolierbeschichtung ist dabei aus einem elastomeren Material ausgebildet und wird direkt auf die Kraftfahrzeugstromschiene aufgegossen.

### Darstellung der Erfindung

Der Erfindung liegt die Aufgabe zugrunde, eine Stromschiene bereitzustellen, welche eine verbesserte Betriebssicherheit ermöglicht.

Die Aufgabe wir mit den Merkmalen von Anspruch 1 gelöst. Auf vorteilhafte Ausgestaltungen nehmen die Unteransprüche Bezug.

Die erfindungsgemäße Stromschiene umfasst einen elektrisch leitfähigen Verbinder und eine elektrisch isolierende Umhüllung, wobei der Verbinder zumindest zwei durch einen Steg verbundene Anschlussbereiche aufweist, wobei die Umhüllung den Steg umgibt, wobei die Umhüllung aus Kunststoff ausgebildet ist, wobei die Umhüllung als Formteil ausgebildet ist.

Dabei ist die Umhüllung vorzugsweise materialeinheitlich und einstückig ausgebildet. Eine solche Stromschiene ermöglicht eine sichere elektrische Verbindung auch im Störfall und außerhalb der üblichen Betriebsbedingungen. Der Verbinder kann elektrische Kontaktpunkte kontaktieren und eine elektrisch leitfähige Verbindung zwischen den Kontaktpunkten herstellen. Durch die Ausgestaltung der Umhüllung als Formteil kann die Außenkontur der Umhüllung und damit in dem Bereich des Steges die Außenkontur der Stromschiene genau festgelegt werden, so dass eine exakte Anpassung der Geometrie an den jeweiligen Anwendungsfall möglich ist.

Der Verbinder kann aus Metall ausgebildet sein, insbesondere aus Kupfer oder Aluminium. Denkbar ist auch, dass der Verbinder aus einer Metalllegierung ausgebildet ist. Dabei kann der Verbinder aus Vollmaterial ausgebildet sein, wodurch eine große Querschnittsfläche erreicht wird, um hohe Ströme ohne einen zu großen Temperaturanstieg leiten zu können. Denkbar ist auch, dass der Verbinder aus einem Mehrlagenaufbau ausgestaltet ist, um bei geringem Gewicht besonders formstabil zu sein. Ebenso ist denkbar den Verbinder als Geflecht auszugestalten. Dadurch kann die Flexibilität des Verbinders verbessert werden. Denkbar ist auch, dass der Verbinder aus Metall ausgebildet ist, wobei die Oberfläche des Verbinders mit einer metallischen Beschichtung versehen ist.

Vorzugsweise ist der Steg derart durch die Umhüllung umgeben, dass die Umhüllung den Steg vollständig ummantelt. Dabei kann die Umhüllung unmittelbar an dem Steg angeordnet sein und an der Oberfläche des Stegs anliegen. Die Umhüllung bewirkt dadurch eine elektrische Isolation des Verbinders, so dass eine elektrische Verbindung nur über die Anschlussbereiche erfolgen kann. Dies ist insbesondere für die Betriebssicherheit vorteilhaft, um ungewollte elektrisch leitende Verbindungen zwischen der Stromschiene und anderen Bauteilen außerhalb der Anschlussbereiche zu verhindern.

Die Betriebssicherheit verbessert sich, wenn die Umhüllung aus einem Kunststoffmaterial ausgebildet ist, wobei das Kunststoffmaterial thermische Eigenschaften aufweist. Das Kunststoffmaterial kann dabei besonders gut von außen eingebrachter thermischer Energie widerstehen.

Das Kunststoffmaterial weist vorzugsweise gute Widerstandseigenschaften gegen abrasive Partikel auf. Dadurch kann auch in Fällen außerhalb der der üblichen Bedingungen (beispielsweise im Störfall von Energiespeicherzellen) die elektrische Isolation der Umhüllung aufrechterhalten werden, so dass die Betriebssicherheit der Stromschiene verbessert wird.

Die Umhüllung kann aus spritzgießfähigem Kunststoff ausgebildet sein. Dabei kann der Kunststoff ein Thermoplast, Duroplast oder Elastomer sein. Vorzugsweise ist die Umhüllung aus einem Elastomer ausgebildet.

Die Umhüllung kann als Spritzgussformteil ausgebildet sein. Dadurch ist eine Herstellung großer Mengen umhüllter Stromschienen in kurzer Zeit möglich. Zudem können komplexe Außenkonturen der Umhüllung bei gleichbleibend hohen Stückzahlen realisiert werden. Denkbar sind Umspritzungen der Verbinder mit unterschiedlichen Dicken oder einer speziellen Formgebung der Umhüllung. Auf diese Weise können problemlos Stromschienen in unterschiedlichen Abmessungen in hoher Qualität und zu geringen Kosten erstellt werden.

Die Umhüllung kann aus einem Silikon-Elastomer ausgebildet sein. Silikon-Elastomere sind elektrisch sehr gut isolierend und weisen eine hohe Temperaturstabilität auf. Insbesondere kann die Umhüllung aus einem Flüssigsilikon-Elastomer ausgebildet sein, vorzugsweise aus einem Silikoncompound. Silikon-Elastomere wandeln sich bei hohen Temperaturen zu einem signifikanten Teil in mineralische Substanzen um, insbesondere in Siliziumoxide. Die so entstehenden Abbauprodukte sind nicht elektrisch leitend. Dadurch kann verhindert werden, dass die Umhüllung bei Flammenbelastung elektrisch leitfähige Abbauprodukte ausbildet. Die elektrische Isolation der Umhüllung bleibt erhalten.

Die Umhüllung kann mit zumindest einem Füllstoff versehen sein. Durch Füllstoffe kann sowohl die Temperatur- als auch die Abrasionsresistenz der Umhüllung weiter verbessert werden. Dabei kann ein Füllstoff zur Verbesserung der Temperaturresistenz und ein weiterer Füllstoff zu Verbesserung der Abrasionsresistenz vorgesehen sein.

Der Füllstoff kann ein anorganisches Material umfassen. Vorzugsweise umfasst der Füllstoff Metalloxide und/oder chemische Derivate von Metalloxiden, insbesondere Hydroxide basierend auf Metallverbindungen aus Chrom, Eisen, Aluminium, Magnesium oder Zink. Bevorzugt liegen die chemischen Derivate in Pulverform vor. Bevorzugt sind als Füllstoff insbesondere endotherm reagierende Verbindungen vorgesehen. Dadurch können bei einer thermischen Belastung im Störfall die endotherm reagierenden Füllstoffe thermische Energie aufnehmen und damit die Wärmebelastung der Umhüllung unmittelbar reduzieren.

Denkbar ist weiterhin der Einsatz von Füllstoffen, die bei thermischer Belastung zu einem Verglasen führen, um dadurch die Umhüllung zu schützen. Weiterhin ist bei Ausgestaltung der Umhüllung aus Silikon-Elastomeren ein hoher Anteil an Füllstoffen möglich, ohne dass das Material der Umhüllung zu sehr verhärtet. Dadurch kann eine Flexibilität der Umhüllung auch bei hohem Füllgrad des Füllstoffs erhalten bleiben, die sich vorteilhaft bei mechanischer Beanspruchung, beispielsweise Vibrationen oder mechanischen Verspannungen, aber auch bei segmentweise flexibel ausgelegten Stromschienen auswirkt.

Der Steg kann eine erste Stegseite und eine der ersten Stegseite gegenüberliegende zweite Stegseite aufweisen. Dabei kann der Steg im Querschnitt rechteckförmig ausgebildet sein und zwei lange Seiten und zwei kurze Seiten aufweisen, wobei eine der zwei langen Seiten die erste Stegseite bildet und wobei die andere der beiden langen Seiten die zweite Stegseite bildet. Die Übergänge zwischen zwei Seiten können abgerundet sein. Denkbar sind auch komplexere Geometrien mit einer ersten und einer zweiten Stegseite. Die erste und die zweite Stegseite können entlang der Stromschiene Flächen ausbilden, wobei die Flächen im Wesentlichen eben ausgebildet sind. Die Flächen können aber auch gewölbt ausgebildet sein.

Die Umhüllung kann auf der ersten Stegseite dicker als auf der zweiten Stegseite sein. Dadurch kann erreicht werden, dass die Umhüllung auf der ersten Stegseite widerstandsfähiger ist, insbesondere gegen thermische Energie oder abrasive Partikel. Durch eine dickere Umhüllung auf der ersten Stegseite kann mehr thermische Energie aufgenommen werden. Ebenso werden mehr abrasive Partikel benötigt, um die dickere Umhüllung zu durchdringen.

Die Stromschiene kann einen der ersten Stegseite zugeordneten Verstärkungsbereich aufweisen, wobei die Umhüllung im Verstärkungsbereich dicker ist als in einem der übrigen Bereiche. Dabei ist der Verstärkungsbereich vorzugsweise auf der Seite der Umhüllung angeordnet, die einer möglichen Hitzeoder Partikelstrahlenquelle zugewandt ist, um eine hohe Widerstandsfähigkeit gegenüber thermischer Energie oder abrasiven Partikeln zu bewirken.

Die Umhüllung kann einen Grundkörper und einen Zusatzkörper aufweisen, wobei der Zusatzkörper auf einer dem Verbinder abgewandten Seite des Grundkörpers angeordnet ist und wobei der Zusatzkörper der ersten Stegseite zugeordnet ist. Der Zusatzkörper ist vorzugsweise auf der zur Umgebung weisenden Außenseite des Grundkörpers angeordnet. Ein Teil der auf die Stromschiene treffenden abrasiven Partikel treffen im Störfall auf den Zusatzkörper, so dass weniger abrasive Partikel auf den Grundkörper treffen.

Zusätzlich kann der Zusatzkörper thermisch isolierend ausgestaltet sein. Dadurch kann thermische Energie, die auf die Stromschiene trifft, durch den thermisch isolierenden Zusatzkörper von dem Grundkörper abgehalten werden. Der Zusatzkörper reduziert die Intensität der Hitze- oder Partikelbelastung auf den Grundkörper, so dass durch diese Maßnahmen die Betriebssicherheit weiter verbessert werden kann. Denkbar ist, dass der Zusatzkörper derart ausgeformt ist, dass zwischen Zusatzkörper und Grundkörper ein Isolationsbereich ausgebildet ist. Insbesondere kann der Isolationsbereich einen luftgefüllten Zwischenraum begrenzen, um die Isolationswirkung zu verbessern. Weiterhin ist denkbar, dass der Zusatzkörper und der Grundkörper einstückig und materialeinheitlich ausgebildet sind. Dabei kann der Grundkörper als Lippe oder spoilerartig geformt sein und insbesondere von dem Grundkörper abragen.

Der Stromschiene kann ein Wärmeleitkörper zugeordnet sein, wobei die zweite Stegseite dem Wärmeleitkörper zugeordnet ist und die Umhüllung den Wärmeleitkörper wärmeleitend kontaktiert. Der Wärmeleitkörper kann dabei ein Kühler oder ein Gehäuseteil sein. Im Falle eines Störfalls und der damit einhergehenden thermischen Belastung der Umhüllung kann zumindest ein Teil der thermischen Energie an den Wärmeleitkörper abgegeben werden. Damit wird die thermische Belastung der Umhüllung unmittelbar reduziert.

Die Umhüllung kann zumindest abschnittsweise thermisch leitfähig sein und beispielsweise einen thermisch leitfähigen Abschnitt ausbilden. Durch die thermische Leitfähigkeit kann die auf die Umhüllung treffende thermische Energie besser verteilt werden, wodurch eine lokale Konzentration thermischer Energie auf einen größeren Bereich verteilt wird und die Wärmebelastung sinkt.

Der thermisch leitfähige Abschnitt kann der zweiten Stegseite zugeordnet sein, wobei der thermisch leitfähige Abschnitt vorzugsweise zwischen dem Verbinder und dem Wärmeleitkörper angeordnet ist. Dabei kann sich der thermisch leitfähige Abschnitt von dem Verbinder bis zu dem Wärmeleitkörper erstrecken. Der thermisch leitfähige Abschnitt kann demnach über die gesamte Dicke der Umhüllung angeordnet sein. Dadurch kann die thermische Energie im Störfall besser an den Wärmeleitkörper abgegeben werden. Denkbar ist zudem, dass der thermische leitfähige Bereich komprimierbar und/oder deformierbar ist. Dadurch kann zwischen dem thermisch leitfähigen Abschnitt der Umhüllung und dem Wärmeleitkörper eine feste Verbindung erreicht werden, wodurch der Wärmetransport verbessert wird. Zudem kann ein verbesserter Toleranzausgleich von Fertigungs- oder Montagetoleranzen der Bauteile erreicht werden. Denkbar ist auch, dass hohe Temperaturen des Verbinders, beispielsweise bei einem Schnelladevorgang in einem Energiespeichersystem eines Elektrofahrzeugs, an den Wärmeleitkörper abgegeben werden können.

Die Umhüllung kann derart ausgebildet sein, dass sie eine elektrische Durchschlagfestigkeit von mindestens 3.000 V/mm aufweist. Vorzugsweise weist die Umhüllung eine elektrische Durchschlagfestigkeit von mindestens 4.000 V/mm auf.

Die elektrische Durchschlagfestigkeit der Umhüllung kann nach einer thermischen Beaufschlagung von 1.000 °C während einer Zeitdauer von 5 Minuten bei mindestens 1.000 V/mm liegen.

Der Verbinder kann mit der Umhüllung zumindest teilweise stoffschlüssig verbunden sein. Eine solche Anbindung der Umhüllung an die Oberfläche des Verbinders erhöht die Festigkeit der Stromschiene im Störfall und damit die Betriebssicherheit.

Der Erfindung liegt darüber hinaus die Aufgabe zugrunde, ein Energiespeichersystem mit verbesserter Betriebssicherheit bereitzustellen.

Diese Aufgabe wird durch ein Energiespeichersystem gelöst, umfassend mehrere Energiespeicherzellen und zumindest eine erfindungsgemäße Stromschiene.

Vorzugsweise umfasst das Energiespeichersystem ein Gehäuse. Denkbar ist, dass das Gehäuse einen Wärmeleitkörper bildet und mit der Stromschiene kontaktiert.

Die Stromschiene kann derart an den Energiespeicherzellen angeordnet sein, dass die erste Stegseite der Stromschiene den Energiespeicherzellen zugewandt ist. Dadurch können zusätzliche Betriebssicherheitsmaßnahmen der Stromschiene, die auf der ersten Stegseite angeordnet sein können, beispielsweise ein Verstärkungsbereich oder ein Zusatzkörper, im Störfall gezielt einer möglichen Hitzeoder Partikelstrahlenquelle entgegengesetzt werden, um so die Betriebssicherheit des Energiespeichersystems zu verbessern.

Die Energiespeicherzellen können zu Modulen verkoppelt sein, wobei die Module durch Stromschienen verbunden sind. Dadurch wird lediglich für die Verbindung von Modulen eine Stromschiene benötigt, so dass im Störfall weniger Stromschienen einer möglichen Hitze- oder Partikelstrahlenquelle ausgesetzt sind, um so die Betriebssicherheit des Energiespeichersystems zu verbessern. Zudem können mehrere, zu einem Modul zusammengefasste Energiespeicherzellen einheitlich ausgetauscht werden.

### Kurzbeschreibung der Zeichnung

Eine Ausgestaltung der erfindungsgemäßen Stromschiene wird nachfolgend anhand der Figuren näher erläutert. Diese zeigen, jeweils schematisch:
- Fig. 1: eine perspektivische Ansicht einer Stromschiene mit teilweise geschnitten dargestellter Umhüllung;
- Fig. 2: eine Schnittansicht einer weiteren Stromschiene mit Zusatzkörper;
- Fig. 3: eine Schnittansicht einer weiteren Stromschiene mit thermisch leitfähigem Abschnitt und Wärmeleitkörper;
- Fig. 4: eine Schnittansicht einer weiteren Stromschiene mit komprimierbarem thermisch leitfähigem Abschnitt und Wärmeleitkörper;
- Fig. 5: eine Schnittansicht der Stromschiene aus Figur 4 mit alternativ komprimiertem thermisch leitfähigem Abschnitt;
- Fig. 6: eine perspektivische Ansicht eines Energiespeichersystems;
- Fig. 7: eine perspektivische Ansicht des Energiespeichersystems aus Figur 6;
- Fig. 8: eine Schnittansicht einer weiteren Stromschiene mit Schutzelement;
- Fig. 9: eine Schnittansicht einer weiteren Stromschiene mit Schutzlippen.

### Ausführung der Erfindung

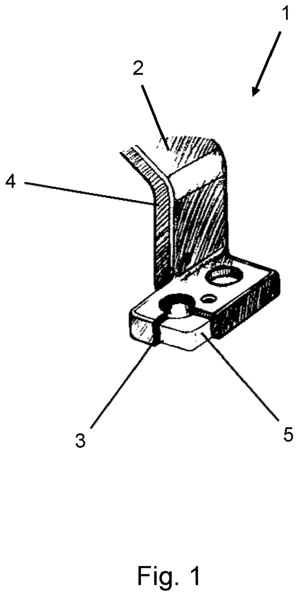

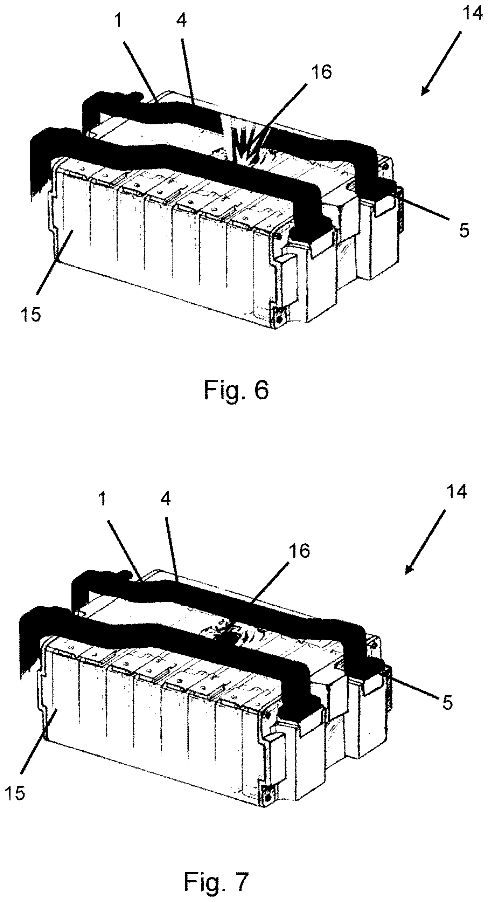

Die Figuren 1 bis 5, 8 und 9 zeigen verschiedene Ausgestaltungen einer Stromschiene 1. Die Figuren 6 und 7 zeigen ein Energiespeichersystem, umfassend ebenfalls eine Stromschiene 1. Daher werden im Folgenden zunächst die Gemeinsamkeiten der Stromschienen 1 gemeinsam beschrieben.

Die genannten Figuren beinhalten eine Stromschiene 1, umfassend einen elektrisch leitfähigen Verbinder 2 und eine elektrisch isolierende Umhüllung 3. Der Verbinder 2 weist zumindest zwei durch einen Steg 4 verbundene Anschlussbereiche 5 auf, wobei die Umhüllung 3 den Steg 4 umgibt. Der Steg 4 weist eine erste Stegseite 6 und eine der ersten Stegseite 6 gegenüberliegende zweite Stegseite 7 auf. Dabei ist der Steg 4 im Querschnitt rechteckförmig ausgebildet und weist zwei lange Seiten und zwei kurze Seiten auf, wobei eine der zwei langen Seiten die erste Stegseite 6 bildet und wobei die andere der beiden langen Seiten die zweite Stegseite 7 bildet. Die erste Stegseite 6 und die zweite Stegseite 7 bilden entlang der Stromschiene 1 Flächen aus, wobei die Flächen im Wesentlichen eben ausgebildet sind. In einer alternativen Ausgestaltung sind die Flächen gewölbt ausgebildet.

Die Umhüllung 3 ist materialeinheitlich und einstückig aus Kunststoff ausgebildet, wobei die Umhüllung 3 als Formteil ausgebildet ist. Die Umhüllung 3 ist aus spritzgießfähigem Kunststoff und als Spritzgussformteil ausgebildet. Die Umhüllung 3 ist bei der vorliegenden Ausgestaltung aus einem Silikon-Elastomer ausgebildet.

Die Umhüllung 3 ist mit Füllstoffen versehen. Durch Füllstoffe verbessert sich sowohl die Temperatur- als auch die Abrasionsresistenz der Umhüllung 3. Dabei ist ein erster Füllstoff zur Verbesserung der Temperaturresistenz und ein zweiter Füllstoff zu Verbesserung der Abrasionsresistenz vorgesehen.

Die Umhüllung 3 weist eine elektrische Durchschlagfestigkeit von mehr als 3.000 V/mm auf. Die elektrische Durchschlagfestigkeit der Umhüllung 3 liegt nach einer thermischen Beaufschlagung von 1.000 °C während einer Zeitdauer von 5 min bei mindestens 1.000 V/mm.

Der Verbinder 2 ist mit der Umhüllung 3 zumindest teilweise stoffschlüssig verbunden.

Figur 1 zeigt eine perspektivische Ansicht einer Stromschiene 1 mit teilweise geschnitten dargestellter Umhüllung 3.

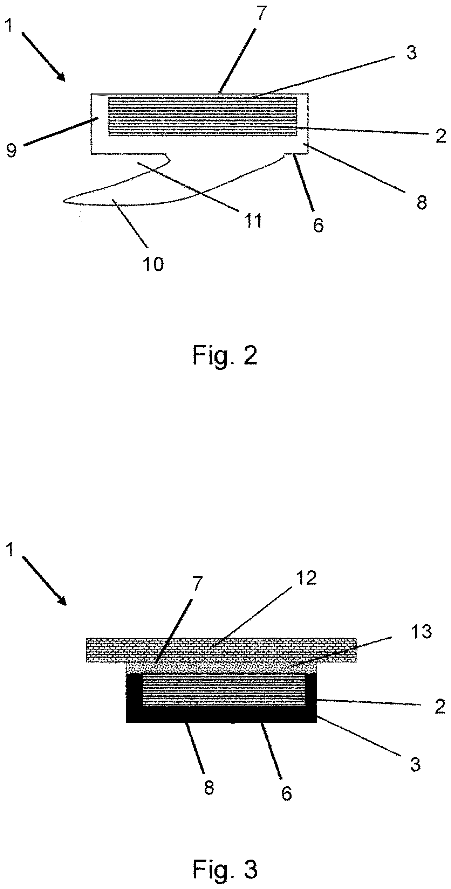

Figur 2 zeigt eine Schnittansicht einer weiteren Stromschiene 1 mit Zusatzkörper 10. Die Umhüllung 3 ist auf der ersten Stegseite 6 dicker als auf der zweiten Stegseite 7 ausgebildet. Die Stromschiene 1 weist einen der ersten Stegseite 6 zugeordneten Verstärkungsbereich 8 auf, wobei das Verhältnis einer Dicke der Umhüllung 3 in dem Verstärkungsbereich 8 zu einer Dicke der Umhüllung 3 außerhalb des Verstärkungsbereichs 8 sechs beträgt. Dabei ist der Verstärkungsbereich 8 auf einer einer möglichen Hitze- oder Partikelstrahlenquelle zugewandten Seite der Umhüllung 3 zugeordnet.

Die Umhüllung 3 weist einen Grundkörper 9 und einen Zusatzkörper 10 auf, wobei der Zusatzkörper 10 auf einer dem Verbinder 2 abgewandten Seite des Grundkörpers 9 angeordnet ist und wobei der Zusatzkörper 10 der ersten Stegseite 6 zugeordnet ist. Der Zusatzkörper 10 ist demnach auf der Außenseite des Grundkörpers 9 angeordnet. Ein Teil der in Richtung auf die Stromschiene 1 ausgestoßenen abrasiven Partikel treffen auf den Zusatzkörper 10, so dass weniger abrasive Partikel direkt auf den Grundkörper 9 treffen. Zusätzlich ist der Zusatzkörper 10 thermisch isolierend ausgestaltet. Dadurch wird thermische Energie, die auf die Stromschiene 1 trifft, durch den thermisch isolierenden Zusatzkörper 10 von dem Grundkörper 9 abgehalten. Der Zusatzkörper 10 ist derart ausgeformt, dass zwischen Zusatzkörper 10 und Grundkörper 9 ein Isolationsbereich 11 ausgebildet ist. Der Isolationsbereich 11 begrenzt einen luftgefüllten Zwischenraum, der die Isolationswirkung verbessert. Der Zusatzkörper 10 und der Grundkörper 9 sind einstückig und materialeinheitlich ausgebildet. Dabei ist der Grundkörper 9 als Lippe ausgebildet.

Figur 3 zeigt eine Schnittansicht einer weiteren Stromschiene 1 mit thermisch leitfähigem Abschnitt und Wärmeleitkörper 12. Der Stromschiene 1 ist ein Wärmeleitkörper 12 zugeordnet, wobei die zweite Stegseite 7 dem Wärmeleitkörper 12 zugeordnet ist und die Umhüllung 3 den Wärmeleitkörper 12 wärmeleitend kontaktiert. Der Wärmeleitkörper 12 ist dabei als Wärmesenke ausgebildet, konkret als Kühler. Sowohl im Normalbetrieb als auch im Störfall und der mit dem Störfall einhergehenden thermischen Belastung der Umhüllung 3 wird ein Teil der thermischen Energie an den Wärmeleitkörper 12 abgegeben.

Die Umhüllung 3 ist abschnittsweise thermisch leitfähig ausgebildet, wobei sich ein thermisch leitfähiger Abschnitt 13 bildet. Durch die thermische Leitfähigkeit kann die auf die Umhüllung 3 treffende thermische Energie besser verteilt werden.

Der thermisch leitfähige Abschnitt 13 ist der zweiten Stegseite 7 zugeordnet, so dass der thermisch leitfähige Abschnitt 13 zwischen dem Verbinder 2 und dem Wärmeleitkörper 12 angeordnet ist. Dabei erstreckt sich der thermisch leitfähige Abschnitt 13 von dem Verbinder 2 bis zu dem Wärmeleitkörper 12. Der thermisch leitfähige Abschnitt 13 ist demnach über die gesamte Dicke der Umhüllung 3 angeordnet.

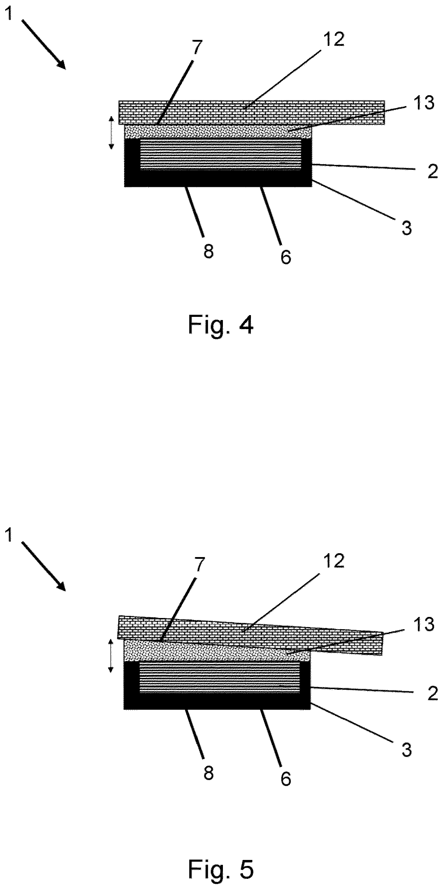

Die Figuren 4 und 5 zeigen jeweils eine Schnittansicht einer weiteren Stromschiene 1 mit einem thermisch leitfähigem Abschnitt 13 und Wärmeleitkörper 12. Dabei ist der thermische leitfähige Abschnitt 13 komprimierbar und deformierbar ausgestaltet, so dass zwischen dem thermisch leitfähigen Abschnitt 13 der Umhüllung 3 der dem Wärmeleitkörper 12 ein flächiger Kontakt entsteht, wodurch der Wärmetransport verbessert wird. In Figur 4 ist der thermische leitfähige Abschnitt 13 gleichmäßig komprimiert, so dass der thermisch leitfähige Abschnitt 13 eine im Wesentlichen gleichbleibende Dicke aufweist. In Figur 5 ist der thermische leitfähige Abschnitt 13 ungleichmäßig komprimiert, so dass der thermische leitfähige Abschnitt 13 eine zu- bzw. abnehmende Dicke aufweist. Im Vergleich zu Figur 4 ist der rechte Teil des thermisch leitfähigen Abschnitts 13 stärker komprimiert als der linke Teil des thermisch leitfähigen Abschnitts 13.

In den Figuren 6 und 7 ist jeweils eine perspektivische Ansicht eines Energiespeichersystems 14 dargestellt.

Die beiden Figuren zeigen ein Energiespeichersystem 14, umfassend mehrere Energiespeicherzellen 15 und zwei Stromschienen 1. Das Energiespeichersystem 14 umfasst ein Gehäuse, das aus Gründen der Übersichtlichkeit hier nicht dargestellt ist. Die Energiespeicherzellen 15 weisen jeweils eine Abblasöffnung 16 auf, die dazu ausgelegt ist im Störfall gezielt heiße Gase und/oder Partikelströme aus dem Inneren der Energiespeicherzellen 15 zu leiten. Das Energiespeichersystem 14 weist zwei Stromschienen 1 auf, wobei die Stromschienen 1 voneinander beabstandet angeordnet sind. Dabei ist die Abblasöffnung 16 zwischen den Stromschienen 1 angeordnet.

Die Stromschiene 1 ist derart an den Energiespeicherzellen 15 angeordnet, dass die erste Stegseite 6 der Stromschiene 1 den Energiespeicherzellen 15 zugewandt ist. Dadurch sind die zuvor beschriebenen Betriebssicherheitsmaßnahmen der Stromschiene 1, die auf der ersten Stegseite 6 angeordnet sind, nämlich der Verstärkungsbereich 8 oder der Zusatzkörper 10 (hier nicht dargestellt), im Störfall der Abblasöffnung 16 zugewandt und dadurch einer möglichen Hitze- oder Partikelstrahlenquelle entgegengesetzt.

In Figur 6 ist das Energiespeichersystem 14 im Störfall dargestellt. Aus einer Abblasöffnung 16 entweichen heiße Gase und Partikelströme, die teilweise auch auf die Stromschienen 1 treffen. In Figur 7 ist das Energiespeichersystem 14 aus Figur 6 nach Abklingen des Störfalls dargestellt. Erkennbar sind Schäden im Bereich der Abblasöffnung 16. Die Umhüllung 3 der Stromschienen 1 gewährleisten nach wie vor eine ausreichende elektrische Isolierung der Stromschienen 1.

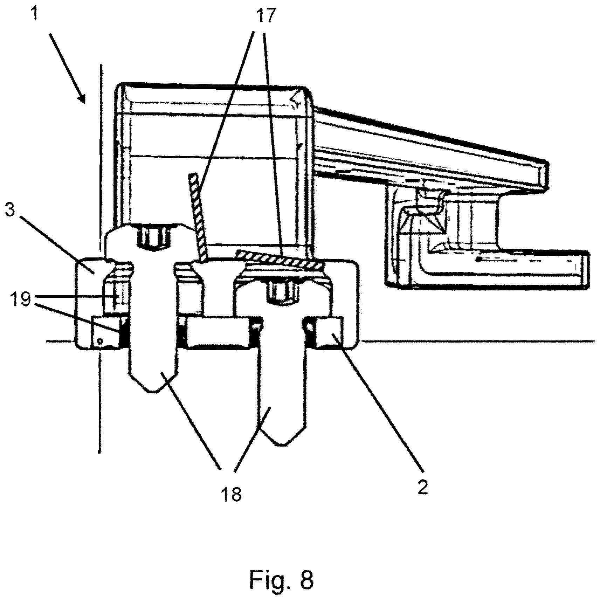

Figur 8 zeigt eine Schnittansicht einer weiteren Stromschiene 1 mit Schutzelementen 17. Die Stromschiene 1 umfasst einen Verbindungsbereich mit zumindest einer Ausnehmung 19, wobei sich die Ausnehmung 19 durch den Verbinder 2 und die Umhüllung 3 erstreckt. Die in den Verbinder 2 und die Umhüllung 3 eingebrachte Ausnehmungen 19 sind zueinander konzentrisch angeordnet. In der Ausnehmung 19 kann ein Verbindungselement 18, beispielsweise eine Schraube, angeordnet sein. Mittels des Verbindungselements 18 kann die Stromschiene 1 an einer weiteren Komponente, beispielsweise einer Energiespeicherzelle (hier nicht dargestellt), festgelegt werden. Dazu kann ein Bereich des Verbindungselements 18, beispielsweise der Kopf einer Schraube, im Durchmesser derart vergrößert ausgestaltet sein, so dass der vergrößerte Bereich einen größeren Durchmesser als die Ausnehmung 19 in dem Verbinder 2 aufweist. Dadurch kann das Verbindungselement 18 an dem Verbinder 2 formschlüssig festgelegt werden.

Der Durchmesser der Ausnehmung 19 in der Umhüllung 3 ist größer als der Durchmesser der Ausnehmung 19 in dem Verbinder 2, so dass die Ausnehmung 19 der Umhüllung 3 den vergrößerten Bereich des Verbindungselements 18 aufnehmen kann. Die Umhüllung 3 kann ein Schutzelement 17 aufweisen. Das Schutzelement 17 kann flexibel ausgestaltet sein. Die Ausnehmung 19 der Umhüllung 3 kann durch das Schutzelement 17 abgedeckt sein. Dadurch kann die Ausnehmung 19 der Umhüllung 3 insbesondere nach Einbringen des Verbindungselements 18 abgedeckt werden, wodurch ein Berührungsschutz des Verbindungselement 18 erreicht werden kann, um die Betriebssicherheit zu erhöhen.

Das Schutzelement 17 kann als Klappe ausgebildet sein. Denkbar ist auch, dass das Schutzelement 17 als Perforation in einem flächigen Element ausgebildet ist, die nach Einbringen des Verbindungselements 18 schließt. In Figur 8 sind zwei Ausnehmungen 19 in dem Verbinder 2, zwei dazu konzentrisch angeordnete Ausnehmungen 19 in der Umhüllung 3, zwei Verbindungselemente 18 und zwei Schutzelemente 17 gezeigt.

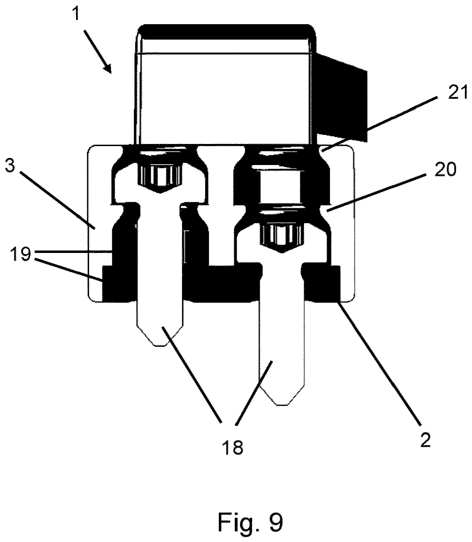

Figur 9 zeigt eine Schnittansicht einer weiteren Stromschiene 1 mit Schutzlippen 20, 21. Die Stromschiene 1 umfasst einen Verbindungsbereich mit zumindest einer Ausnehmung 19, wobei sich die Ausnehmung 19 durch den Verbinder 2 und die Umhüllung 3 erstreckt. Die in den Verbinder 2 und die Umhüllung 3 eingebrachte Ausnehmungen 19 sind zueinander konzentrisch angeordnet. Die beiden Schutzlippen 20,21 sind durch einen umlaufenden Kragen der Umhüllung 3 ausgebildet. Die beiden Schutzlippen 20, 21 ragen in die Ausnehmung 19 hinein. Die Schutzlippe 21 ist oberhalb der Schutzlippe 20 angeordnet. In der Ausnehmung 19 kann ein Verbindungselement 18, beispielsweise eine Schraube, angeordnet sein. Durch die beiden Schutzlippen 20, 21 wird das Verbindungselement 18 teilweise abgedeckt, so dass ein erhöhter Berührungsschutz entsteht. Die Schutzlippen 20,21 sind zur besseren Montage der Verbindungselemente 18 flexibel ausgestaltet.

## Patentansprüche

1. Stromschiene (1), umfassend einen elektrisch leitfähigen Verbinder (2) und eine elektrisch isolierende Umhüllung (3), wobei der Verbinder (2) zumindest zwei durch einen Steg (4) verbundene Anschlussbereiche (5) aufweist, wobei die Umhüllung (3) den Steg (4) umgibt, wobei die Umhüllung (3) aus Kunststoff ausgebildet ist, **dadurch gekennzeichnet, dass** die Umhüllung (3) als Formteil ausgebildet ist.

2. Stromschiene nach Anspruch 1, **dadurch gekennzeichnet, dass** die Umhüllung (3) aus einem Silikon-Elastomer ausgebildet ist.

3. Stromschiene nach Anspruch 1 oder 2, **dadurch gekennzeichnet, dass** die Umhüllung (3) mit zumindest einem anorganischen Füllstoff versehen ist.

4. Stromschiene nach einem der Ansprüche 1 bis 3, **dadurch gekennzeichnet, dass** der Steg (4) eine erste Stegseite (6) und eine der ersten Stegseite (6) gegenüberliegende zweite Stegseite (7) aufweist.

5. Stromschiene nach Anspruch 4, **dadurch gekennzeichnet, dass** die Umhüllung (3) auf der ersten Stegseite (6) dicker ist, als auf der zweiten Stegseite (7).

6. Stromschiene nach einem der Ansprüche 4 oder 5, **dadurch gekennzeichnet, dass** die Umhüllung (3) einen Grundkörper (9) und einen Zusatzkörper (10) aufweist, wobei der Zusatzkörper (10) auf einer dem Verbinder (2) abgewandten Seite des Grundkörpers (9) angeordnet ist und wobei der Zusatzkörper (10) der ersten Stegseite (6) zugeordnet ist.

7. Stromschiene nach einem der Ansprüche 4 bis 6, **dadurch gekennzeichnet, dass** der Stromschiene (1) ein Wärmeleitkörper (12) zugeordnet ist, wobei die zweite Stegseite (7) dem Wärmeleitkörper (12) zugeordnet ist und die Umhüllung (3) den Wärmeleitkörper (12) wärmeleitend kontaktiert.

8. Stromschiene nach Anspruch 7, **dadurch gekennzeichnet, dass** die Umhüllung (3) zumindest abschnittsweise thermisch leitfähig (13) ist.

9. Stromschiene nach Anspruch 8, **dadurch gekennzeichnet, dass** der thermisch leitfähige Abschnitt (13) der zweiten Stegseite (7) zugeordnet ist, so dass der thermisch leitfähige Abschnitt (13) zumindest teilweise zwischen dem Verbinder (2) und dem Wärmeleitkörper (12) angeordnet ist.

10. Stromschiene nach einem der Ansprüche 1 bis 9, **dadurch gekennzeichnet, dass** die Umhüllung (3) eine elektrische Durchschlagfestigkeit von mindestens 4.000 V/mm aufweist.

11. Stromschiene nach einem der Ansprüche 1 bis 10, **dadurch gekennzeichnet, dass** die elektrische Durchschlagfestigkeit der Umhüllung (3) nach einer thermischen Beaufschlagung von 1.000 °C während einer Zeitdauer von 5 min bei mindestens 1.000 V/mm liegt.

12. Stromschiene nach einem der Ansprüche 1 bis 11, **dadurch gekennzeichnet, dass** der Verbinder (2) mit der Umhüllung (3) zumindest teilweise stoffschlüssig verbunden ist.

13. Energiespeichersystem (14), umfassend mehrere Energiespeicherzellen (15) und zumindest eine Stromschiene (1) nach einem der Ansprüche 1 bis 12.
